# EUROPEAN PATENT APPLICATION

(11) **EP 4 822 774 A1**
(43) Date of publication of application: **14.10.2026**
(21) Application number: 26170456.3
(22) Date of filing: 02.04.2026
(51) Int. Cl.: H01M 4/36, H01M 4/131, H01M 4/525, H01M 10/0525, H01M 4/02

(54) **POSITIVE ELECTRODE ACTIVE MATERIALS, POSITIVE ELECTRODES, AND RECHARGEABLE LITHIUM BATTERIES**

(30) Priority: 07.04.2025 KR 20250044869
(71) Applicant: SAMSUNG SDI CO., LTD., Yongin-si, Gyeonggi-do 17084 (KR)
(72) Inventor: KANG, Seok Mun, 17084 Yongin-si (KR); KIM, Young-Ki, 17084 Yongin-si (KR); YOON, Jaesang, 17084 Yongin-si (KR); KIM, Jihyeun, 17084 Yongin-si (KR); JEONG, Jaeyoung, 17084 Yongin-si (KR); KIM, Eugene, 17084 Yongin-si (KR)
(74) Representative: Maiwald GmbH

(57) **Abstract**

A positive electrode active material comprises a first positive electrode active material comprising a first lithium nickel-based composite oxide and being in a form of secondary particles that are agglomerations of primary particles. The primary particles has an average particle diameter of about 0.6 µm to about 1.05 µm as measured by electron backscatter diffraction. The positive electrode active material also comprises a second positive electrode active material including a second lithium nickel-based composite oxide and being in a form of single particles. An average particle diameter (D₅₀) of the secondary particles of the first positive electrode active material is greater than an average particle diameter (D₅₀) of the single particles of the second positive electrode active material. Based on 100 wt% of a total of the first positive electrode active material and the second positive electrode active material, the positive electrode active material comprises about 10 to about 45 wt% of the first positive electrode active material and about 55 to about 90 wt% of the second positive electrode active material.

## Description

### BACKGROUND

### 1. Field

Positive electrode active materials, positive electrodes including the positive electrode active materials, and rechargeable lithium batteries are disclosed.

### 2. Description of the Related Art

Portable information devices such as cell phones, laptops, smart phones, and the like use rechargeable lithium batteries having high energy density and easy portability as power sources. Rechargeable lithium batteries with high energy density are also used as driving power sources or power storage power sources for hybrid or electric vehicles.

Various positive electrode active materials have been used in rechargeable lithium batteries. With the recent rapidly increasing demand for high-capacity or high-energy-density rechargeable lithium batteries, there is a need to develop positive electrode active materials that can increase capacity while ensuring stability and enabling operation at high voltages.

### SUMMARY

Disclosed herein are positive electrode active materials capable of providing high-density, high-capacity, high-efficiency, and long cycle-life characteristics in rechargeable lithium batteries, and a positive electrode and a rechargeable lithium battery including the positive electrode active materials.

In some embodiments, a positive electrode active material includes a first positive electrode active material including a first lithium nickel-based composite oxide in a form of secondary particles in which a plurality of primary particles are agglomerated, with the primary particles having an average particle diameter of about 0.6 µm to about 1.05 µm as measured by electron backscatter diffraction; and a second positive electrode active material including a second lithium nickel-based composite oxide in a form of single particles, wherein an average particle diameter (D₅₀) of the secondary particles of the first positive electrode active material is greater than an average particle diameter (D₅₀) of the single particles of the second positive electrode active material, and wherein the positive electrode active material includes about 10 to about 45 wt% of the first positive electrode active material and about 55 to about 90 wt% of the second positive electrode active material based on 100 wt% of a total of the first positive electrode active material and the second positive electrode active material.

In some embodiments, a positive electrode includes a current collector and a positive electrode active material layer on the current collector; wherein the positive electrode active material layer includes the positive electrode active material.

Some example embodiments provide a rechargeable lithium battery including the positive electrode, a negative electrode, and an electrolyte.

According to some embodiments, the positive electrode active material has maximized capacity, ensures long cycle-life characteristics, and improves characteristics at high voltage and high-temperature storage. A rechargeable lithium battery using the aforementioned positive electrode active material may exhibit high initial charge/discharge capacity and efficiency and may have long cycle-life characteristics.

### BRIEF DESCRIPTION OF THE DRAWINGS

FIG.1 is a view of a cylindrical rechargeable lithium battery.
FIG. 2 is a cross-sectional view of a prismatic rechargeable lithium battery.
FIGS. 3 and 4 are schematic exploded perspective views of a pouch-type rechargeable lithium battery.
FIG. 5 is an image of a cross-section of a first positive electrode active material according to Example 1 as observed through electron backscatter diffraction.
FIG. 6 is an image of a cross-section of the first positive electrode active material according to Comparative Example 3 observed through electron backscatter diffraction.

### DETAILED DESCRIPTION

Hereinafter, specific embodiments will be described in detail so that those of ordinary skill in the art can easily implement the embodiments. However, this disclosure may be embodied in many different forms and is not to be construed as limited to the embodiments set forth herein.

The terminology used herein is used to describe embodiments only, and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

Terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

An average particle diameter may be measured by methods well known to those skilled in the art, for example, by electron backscatter diffraction, by a particle size analyzer, or by transmission electron microscope images or scanning electron microscope images. Alternatively, it is possible to obtain an average particle diameter value by measuring using a dynamic light scattering method, performing data analysis, counting the number of particles for each particle size range, and calculating the average particle diameter from this.

"Or" is not to be construed as an exclusive meaning, for example, "A or B" is construed to include A, B, A+B, and the like.

"Metal" includes ordinary metals, transition metals and metalloids (semi-metals). Within the framework of the present application, the term 'metalloid (semi metal)' means a chemical element selected from the group consisting of B, Si, As, Te, and At. The heavier homologues of each of these metalloids (semi metals) hence represent metals. Likewise, the elements of groups 3-12 of the periodic table represent metals and the elements groups 1 and 2 excluding H (but including Be) are regarded as representing metals.

### Positive Electrode Active Material

In some embodiments, a positive electrode active material includes a first positive electrode active material including a first lithium nickel-based composite oxide in a form of secondary particles that are agglomerations of primary particles, the primary particles having an average particle diameter of about 0.6 µm to about 1.05 µm as measured by electron backscatter diffraction; and a second positive electrode active material including a second lithium nickel-based composite oxide in a form of single particles. An average particle diameter (D₅₀) of the secondary particles of the first positive electrode active material is greater than an average particle diameter (D₅₀) of the single particles of the second positive electrode active material, and the positive electrode active material includes about 10 to about 45 wt% of the first positive electrode active material and about 55 to about 90 wt% of the second positive electrode active material, based on 100 wt% of a total of the first positive electrode active material and the second positive electrode active material.

In the positive electrode including a positive electrode active material including a lithium nickel-based composite oxide, a design has been proposed to maximize capacity and implement long cycle-life characteristics by mixing large and small particles. The positive electrode may be made by applying and drying a positive electrode composition including a positive electrode active material onto a current collector and then compressing it. The positive electrode including the large particles and small particles may have problems such as the large particles being broken, the electrode cracking, or the surface of the electrode being damaged during the compressing process. Further, repeated charging and discharging of the battery may accelerate the deterioration of the large particles, leading to a problem of reduced cycle-life characteristics. In addition, since the number of the large particles is generally designed to be greater than the number of the small particles for high-density positive electrode design, the characteristics of the large particles greatly affect the characteristics of the positive electrode. And if the primary particles of the large particles are too large, the electrochemically active surface area is reduced, which lowers the efficiency of the positive electrode. Further, the strain due to volume change during charge and discharge is increased, which has a negative effect on maintaining high-temperature cycle-life. Still further, if the primary particles of the large particles are too small, there is a problem in that the crystallinity is reduced, which reduces the capacity of the positive electrode.

In embodiments of the present disclosure, the capacity of a rechargeable lithium battery is maximized and the battery is made to have long cycle-life characteristics by increasing the density of the positive electrode active material layer and suppressing deterioration of the positive electrode by finely controlling the composition, size, and mixing ratio of the positive electrode active material.

According to some embodiments, a positive electrode active material includes a first positive electrode active material and a second positive electrode active material. The first positive electrode active material includes a first lithium nickel-based composite oxide, and the second positive electrode active material includes a second lithium nickel-based composite oxide. The first positive electrode active material may be expressed as large particles, and the second positive electrode active material may be expressed as small particles. The first lithium nickel-based composite oxide and the second lithium nickel-based composite oxide may be the same or different.

In some embodiments, the first lithium nickel-based composite oxide and the second lithium nickel-based composite oxide may each be independently represented by Chemical Formula 1.

[Chemical Formula 1] Liₐ₁Niₓ₁M¹_{y1}M²_{z1}O_{2-b1}X_{b1}

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² may be different and may independently be one or more of Al, B, Ba, Ca, Ce, Co, Cr, Cu, Fe, Mg, Mn, Mo, Nb, Si, Sn, Sr, Ti, V, W, Y, Zn, and Zr, and X may be one or more elements of F, P, and S. In further embodiments with Chemical Formula 1, 0.6≤x1≤1, 0≤y1≤0.4, and 0≤z1≤0.4; or 0.6≤x1 ≤0.9, 0.1≤y1≤0.4, and 0≤z1≤0.1; or 0.5≤x1≤0.7, 0.3≤y1≤0.5, and 0≤z1≤0.1; or 0.6≤x1≤0.8, 0.2≤y1≤0.4, and 0≤z1≤0.1.

The lithium nickel-based composite oxide may be, for example, represented by Chemical Formula 2 or Chemical Formula 3.

[Chemical Formula 2] Liₐ₂Niₓ₂Co_{y2}M³_{z2}O_{2-b2}X_{b2}

In Chemical Formula 2, 0.9≤a2≤1.2, 0.6≤x2≤0.99, 0.01≤y2≤0.4, 0≤z2≤0.39, 0.9≤x2+y2+z2≤1.1, and 0≤b2≤0.1, M³ may be one or more of Al, B, Ba, Ca, Ce, Cr, Cu, Fe, Mg, Mn, Mo, Nb, Si, Sn, Sr, Ti, V, W, Y, Zn, and Zr, and X may be one or more of F, P, and S.

[Chemical Formula 3] Liₐ₃Niₓ₃Co_{y3}M⁴_{z3}M⁵_{w3}O_{2-b3}X_{b3}

In Chemical Formula 3, 0.9≤a3≤1.2, 0.6≤x3≤0.98, 0.01≤y3≤0.19, 0.01≤z3≤0.39, 0≤w3≤0.19, 0.9≤x3+y3+z3+w3≤1.1, and 0≤b3≤0.1, M⁴ may be Al, Mn, or a combination thereof, M⁵ may be one or more of B, Ba, Ca, Ce, Cr, Cu, Fe, Mg, Mo, Nb, Si, Sn, Sr, Ti, V, W, Y, Zn, and Zr, and X may be one or more of F, P, and S.

A nickel content based on 100 mol% of a total metal in the first lithium nickel-based composite oxide excluding lithium may be greater than a nickel content based on 100 mol% of a total metal in the second lithium nickel-based composite oxide excluding lithium. The nickel content based on 100 mol% of a total metal in the first lithium nickel-based composite oxide excluding lithium and the nickel content based on 100 mol% of a total metal in the second lithium nickel-based composite oxide excluding lithium may each independently be about 50 mol% to about 70 mol%, for example, about 50 mol% to about 65 mol%, about 55 mol% to about 65 mol%, or about 60 mol% to about 65 mol%. In the first lithium nickel-based composite oxide, the nickel content based on 100 mol% of a total metal excluding lithium may be greater than or equal to about 50 mol%, for example, about 50 mol% to about 70 mol%, about 50 mol% to about 65 mol%, about 55 mol% to about 65 mol%, about 60 mol% to about 80 mol%, about 65 mol% to about 80 mol%, about 60 mol% to about 75 mol%, about 60 mol% to about 70 mol%, or about 60 mol% to about 65 mol%. In the second lithium nickel-based composite oxide, the nickel content based on 100 mol% of a total metal excluding lithium may be greater than or equal to about 50 mol%, for example, about 50 mol% to about 70 mol%, about 55 mol% to about 70 mol%, about 50 mol% to about 65 mol%, about 55 mol% to about 65 mol%, about 50 mol% to about 65 mol%, about 55 mol% to about 60 mol%, or about 60 mol% to about 65 mol%. Additionally, a ratio of a molar nickel content based on 100 mol% of a total metal in the first lithium nickel-based composite oxide excluding lithium to a molar nickel content based on 100 mol% of a total metal in the second lithium nickel-based composite oxide excluding lithium may be about 1.05 to about 1.3, for example, about 1.05 to about 1.2, or about 1.05 to about 1.1. When the amounts of nickel in the first lithium nickel-based composite oxide and the second lithium nickel-based composite oxide are in these ranges, high capacity may be achieved in a rechargeable lithium battery while increasing structural stability, reducing side reactions with the electrolyte, and achieving long cycle-life characteristics.

The first positive electrode active material including the first lithium nickel-based composite oxide may be in a form of secondary particles in which a plurality of primary particles are agglomerated. The secondary particles may be spherical, elliptical, polyhedral, or irregularly shaped. The primary particles forming the secondary particles may be spherical, elliptical, plate-shaped, or a combination thereof.

The second positive electrode active material including the second lithium nickel-based composite oxide may be in a form of single particles, and the single particles may have a spherical shape, an elliptical spherical shape, a polyhedral shape, or an irregular shape. The single particles exist alone without a grain boundary within the particles, be composed of one particle, and may be a single particle, a monolith structure, a one body structure, or a non-agglomerated particle, in which particles are not agglomerated with each other but exist as an independent phase in terms of morphology. The single particles may be expressed as one body particle or a single grain, for example, as a single crystal. The single particles may exist alone, or single particles may be agglomerated together. For example, 2 to 10 single particles may be agglomerated and in contact with each other.

An average particle diameter (D₅₀) of the secondary particles of the first positive electrode active material may be about 8 µm to about 20 µm, and may be, for example, about 10 µm to about 18 µm, or about 12 µm to about 16 µm. Here, the average particle diameter (D₅₀) may be obtained by using a particle size analyzer (PSA) for the first positive electrode active material to obtain a particle size distribution, and taking the diameter of particles having a cumulative volume of 50 volume% in the particle size distribution as the average particle diameter.

An average particle diameter (D₅₀) of the single particles of the second positive electrode active material may be about 1 µm to about 8 µm, for example, about 1.5 µm to about 7 µm, or about 2 µm to about 6 µm. Here, the average particle diameter (D₅₀) may be obtained by using a particle size analyzer to obtain a particle size distribution for the second positive electrode active material, and taking the diameter of particles having a cumulative volume of 50 volume% in the particle size distribution as the average particle diameter.

Particle size analysis of the secondary particles of the first positive electrode active material and the single particles of the second positive electrode active material may be performed using, for example, a particle size analyzer using laser diffraction, such as LS13320 (Beckmann Coulter). As particle size analysis conditions, the pump speed may be 55%, ultrasonic dispersion may be performed at 40 kHz for 30 seconds, the run length may be 60 seconds, the refractive index may be 1.6, the e-factor (extinction factor) may be 1.00, the sample amount may be 0.20 g, and the dispersant added to the sample may be 1 ml of 10% sodium hexametaphosphate. D₅₀ refers to the size of particles having a cumulative volume of 50 volume% in the particle size distribution.

In some embodiments, the average particle size of the primary particles forming the secondary particles of the first positive electrode active material, as measured through electron backscatter diffraction, may be about 0.6 µm to about 1.05 µm, for example, about 0.65 µm to about 1.05 µm, about 0.68 µm to about 1.03 µm, about 0.69 µm to about 1.02 µm, about 0.65 µm to about 1.0 µm, about 0.6 µm to about 0.9 µm, about 0.65 µm to about 0.9 µm, about 0.6 µm to about 0.8 µm, or about 0.65 µm to about 0.8 µm. The aspect ratio of the primary particles forming the secondary particles of the first positive electrode active material measured through electron backscatter diffraction may be about 2.7 to about 3.3, for example, about 2.7 to about 3.2, about 2.8 to about 3.2, about 2.8 to about 3.3, about 2.8 to about 3.1, about 2.9 to about 3.2, about 2.9 to about 3.1, or about 3.0 to about 3.1. Here, the average primary particles size and aspect ratio may be measured through electron backscatter diffraction (EBSD) analysis. The EBSD measuring equipment may be, for example, Oxford's Symmetry S3 EBSD, and the sample may be ion milled using CP (Cross-section Polisher, ArBlade5000, Hitachi). EBSD may be measured using an e-flash HR EBSD detector from Bruker at an acceleration voltage of 15 keV and a current of 13 nA. The primary particles may refer to grains. The average particle diameter of the primary particles refers to an average particle diameter of the single particles measured by EBSD, and the aspect ratio of the primary particles may refer to an aspect ratio of the single particles measured by EBSD. When the average particle size and aspect ratio of the primary particles forming the first positive electrode active material are in the above ranges, the electrochemically active surface area increases, thereby increasing the efficiency of the positive electrode, minimizing strain due to volume change during charge and discharge, which thereby enables maintenance of high-temperature cycle-life and increases capacity due to high crystallinity.

The D₅₀ of the positive electrode active material may be about 1 µm to about 20 µm, for example, about 1.5 µm to about 10 µm, or about 2 µm to about 5 µm. Here, D₅₀ may be obtained by obtaining a particle size distribution for the total positive electrode active material including the first positive electrode active material and the second positive electrode active material using a particle size analyzer, and taking the diameter of particles having a cumulative volume of 50 volume% in the particle size distribution as the average particle diameter.

In some example embodiments, the BET (Brunauer, Emmett, Teller) specific surface area of the positive electrode active material may be about 0.6 m²/g to about 0.9 m²/g, for example about 0.6 m²/g to about 0.85 m²/g, about 0.65 m²/g to about 0.85 m²/g, or about 0.7 m²/g to about 0.85 m²/g. Here, the BET specific surface area may be a BET specific surface area measured by a nitrogen gas adsorption method using a specific surface area measuring device for the total positive electrode active material including the first positive electrode active material and the second positive electrode active material. When the specific surface area of the positive electrode active material is in the above range, the electrochemically active surface area increases, thereby increasing the efficiency of the positive electrode.

In some embodiments, based on 100 wt% of the total of the first positive electrode active material and the second positive electrode active material, the first positive electrode active material may be included in an amount of about 10 wt% to about 45 wt%, for example, about 15 wt% to about 40 wt%, about 20 wt% to about 40 wt%, about 20 wt% to about 35 wt%, or about 20 wt% to about 30 wt%, and the second positive electrode active material may be included in an amount of about 55 wt% to about 90 wt%, for example, about 60 wt% to about 85 wt%, about 60 wt% to about 80 wt%, about 65 wt% to about 80 wt%, or about 70 wt% to about 80 wt%. When the amount ratios of the first positive electrode active material and the second positive electrode active material are such, the positive electrode active material may have high capacity, the density of the positive electrode active material layer may be improved, and the positive electrode active material may have high energy density.

A pellet density of the positive electrode active material may be about 3.0 g/cc to about 3.8 g/cc, for example, about 3.1 g/cc to about 3.7 g/cc, about 3.2 g/cc to about 3.6 g/cc, or about 3.3 g/cc to about 3.4 g/cc. A positive electrode having such a high pellet density may have high capacity and energy density.

### Positive Electrode

In some embodiments, a positive electrode includes a positive electrode current collector and a positive electrode active material layer on the current collector, wherein the positive electrode active material layer includes the aforementioned positive electrode active material. The positive electrode active material layer may further include other positive electrode active materials in addition to the aforementioned positive electrode active materials. Additionally, the positive electrode active material layer may further include a binder, a conductive material, or a combination thereof.

In some embodiments, a loading level of the positive electrode active material layer may be about 10 mg/cm² to about 40 mg/cm², for example about 10 mg/cm² to about 35 mg/cm², or about 10 mg/cm² to about 30 mg/cm². A density of the positive electrode active material layer in the compressed final positive electrode may be about 3.2 g/cc to about 3.7 g/cc, for example about 3.3 g/cc to about 3.6 g/cc or about 3.4 g/cc to about 3.5 g/cc. When applying a positive electrode active material according to embodiments of the present disclosure, it may be advantageous to implement such a loading level and density of a positive electrode active material layer and such ranges may provide for a high-capacity, high-energy-density rechargeable lithium battery.

The thickness of the positive electrode active material layer may be about 5 µm to about 300 µm, for example, about 10 µm to about 250 µm, or about 20 µm to about 200 µm. When the thickness of the positive electrode active material layer is in these ranges, a high-capacity and high-energy-density battery may be realized.

### Binder

The binder improves binding properties of positive electrode active material particles with one another and with a current collector. Examples of the binder include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But the present disclosure is not limited to these examples.

### Conductive Material

The conductive material is included to provide electrode conductivity and any electrically conductive material may be used that does not cause an undesirable chemical change in a battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The amounts of the binder and the conductive material may be about 0.5 wt% to about 5 wt% based on 100 wt% of the positive electrode active material layer.

The current collector may be formed from an aluminum thin film, but the present disclosure is not limited thereto.

### Rechargeable Lithium Battery

Some embodiments provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

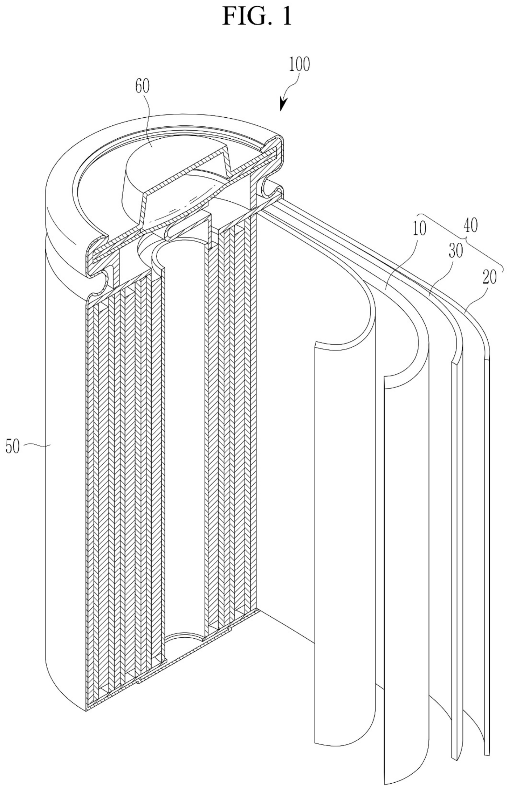

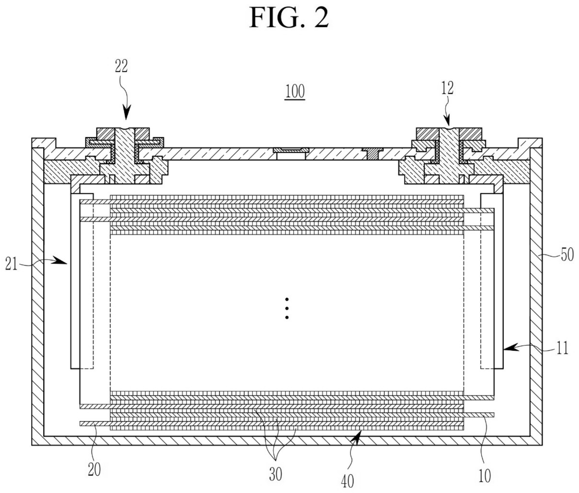

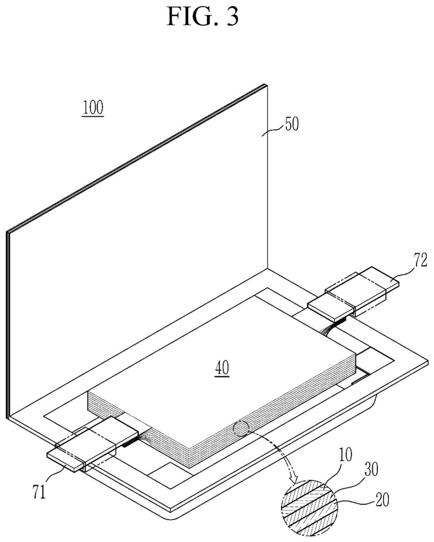

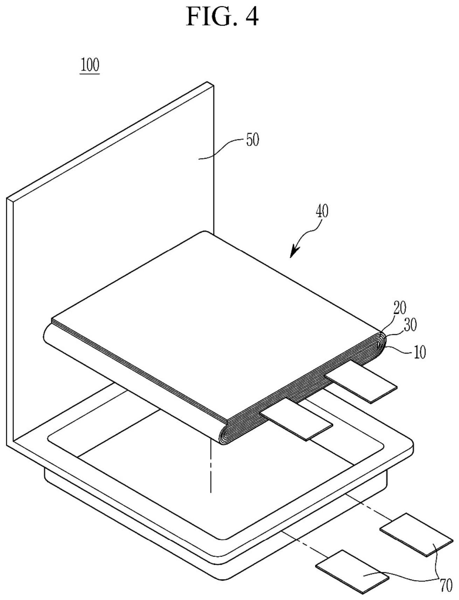

The rechargeable lithium battery may be cylindrical, prismatic, pouch, coin, etc. depending on its shape. FIGS. 1 to 4 are schematic views showing rechargeable lithium batteries according to some embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. As shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 may include an electrode tab 70, that is, a positive electrode tab 71 and a negative electrode tab 72 forming an electrical path for inducing the current formed in the electrode assembly 40 to outside of the battery.

### Negative Electrode

The negative electrode may include a current collector and a negative electrode active material layer on the current collector, and the negative electrode active material layer may include a negative electrode active material, and may further include a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material.

The Si-based negative electrode active material may include silicon, a silicon-carbon composite, SiOₓ (0<x≤2), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles with amorphous carbon coated on the surfaces of the silicon particles. For example, the silicon-carbon composite may include secondary particles (core) in which silicon primary particles are assembled and amorphous carbon coating layers (shell) on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. The silicon-carbon composite may include, for example, a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, an amount of silicon may be about 10 wt% to about 50 wt% and an amount of amorphous carbon may be about 50 wt% to about 90 wt% based on 100 wt% of the silicon-carbon composite. In addition, based on 100 wt% of the silicon-carbon composite, when the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt%.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67. As used herein, when a definition is not otherwise provided, an average particle diameter (D₅₀) indicates a diameter of particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used that does not cause an undesirable chemical change in a battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the negative electrode active material may be about 95 wt% to about 99.5 wt% based on 100 wt% of the negative electrode active material layer, and an amount of the binder may be about 0.5 wt% to about 5 wt% based on 100 wt% of the negative electrode active material layer. The negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam.

A thickness of the current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be used alone or in a mixture of two or more types. When two or more types are used in a mixture, a mixing ratio can be appropriately adjusted according to the desired battery performance, as known to those skilled in the art.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is in this range, the electrolyte solution has appropriate ion conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of a polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer. In other embodiments, a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Examples and comparative examples of the present disclosure are described below. However, present disclosure is not limited to the following examples.

### Example 1

### 1. Preparation of Positive Electrode Active Material

Ni_{0.65}Co_{0.05}Mn_{0.30}(OH)₂ and LiOH were mixed to have a molar ratio of (Ni+Co+Mn):Li = 1:1. The mixture was then heat treated at 880 °C for 8 hours under an oxygen atmosphere to prepare a first positive electrode active material including a first lithium nickel-based composite oxide having a composition of LiNi_{0.65}Co_{0.05}Mn_{0.30}O₂ in the form of secondary particles having an average particle diameter (D₅₀) of 12 µm.

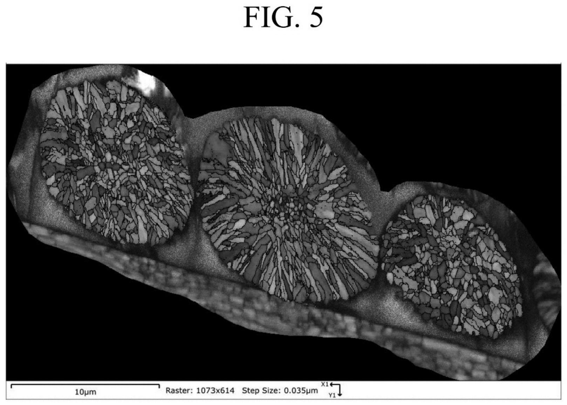

FIG. 5 shows a cross-sectional image of the first positive electrode active material examined through electron backscatter diffraction. The first positive electrode active material in this case had a primary particle size of 0.697 µm and a primary particle aspect ratio of 3.05.

Ni_{0.60}Co_{0.10}Mn_{0.30}(OH)₂ and LiOH were mixed to have a molar ratio of (Ni+Co+Mn):Li = 1:1. The mixture was then heat-treated at 1000 °C for 8 hours under an oxygen atmosphere to obtain a product having a composition of LiNi_{0.60}Co_{0.10}Mn_{0.30}O₂. The product was pulverized by using a pin mill to prepare a second positive electrode active material containing a second lithium nickel-based composite oxide in the form of single particles having an average particle diameter (D₅₀) of 4 µm.

The first positive electrode active material and the second positive electrode active material were mixed in a weight ratio of 4:6 to prepare a positive electrode active material.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed in an N-methyl-2-pyrrolidone (NMP) solvent to prepare positive electrode active material layer slurry. The slurry was coated on an aluminum foil current collector and then dried and compressed to make a positive electrode.

97.5 wt% of a graphite negative electrode active material, 1.5 wt% of carboxymethyl cellulose, and 1 wt% of a styrene butadiene rubber was mixed in a water solvent to prepare a negative electrode active material layer slurry. The negative electrode active material layer slurry was coated on a copper foil current collector, dried, and compressed to make a negative electrode.

Subsequently, a polytetrafluoroethylene separator was used. In addition, an electrolyte solution prepared by dissolving 1 M LiPF₆ in a mixed solvent of ethylene carbonate and dimethyl carbonate in a volume ratio of 3:7 was used to make a rechargeable lithium battery cell according to a common method.

### Example 2

A positive electrode active material and a rechargeable lithium battery cell were made in the same manner as in Example 1 except that the first positive electrode active material and the second positive electrode active material were mixed in a weight ratio of 3:7 to prepare the positive electrode active material.

### Example 3

A positive electrode active material and a rechargeable lithium battery cell were made in substantially in the same manner as in Example 1 except that the first positive electrode active material and the second positive electrode active material were mixed in a weight ratio of 2:8 to prepare the positive electrode active material.

### Example 4

A positive electrode active material and a rechargeable lithium battery cell were made in the same manner as in Example 1 except that the mixture of Ni_{0.65}Co_{0.05}Mn_{0.30}(OH)₂ and LiOH was heat treated at 910 °C for 8 hours to prepare first positive electrode active material had a primary particle size of 1.012 µm and a primary particle aspect ratio of 3.16.

### Example 5

A positive electrode active material and a rechargeable lithium battery cell were made in the same manner as in Example 1 except that the first positive electrode active material and the second positive electrode active material were mixed in a weight ratio of 1:9 to prepare the positive electrode active material.

### Example 6

A positive electrode active material and a rechargeable lithium battery cell were made in the same manner as in Example 1 except that the first positive electrode active material and the second positive electrode active material were mixed in a weight ratio of 4.5:5.5 to prepare the positive electrode active material.

### Comparative Example 1

A positive electrode active material and a rechargeable lithium battery cell were made in the same manner as in Example 1 except that the mixture of Ni_{0.65}Co_{0.05}Mn_{0.30}(OH)₂ and LiOH was heat treated at 910 °C for 16 hours to prepare the first positive electrode active material had a primary particle size of 1.214 µm and a primary particle aspect ratio of 3.45, and the first and second positive electrode active materials was mixed in a weight ratio of 5:5 in preparing the positive electrode active material.

### Comparative Example 2

A positive electrode active material and a rechargeable lithium battery cell were made in the same manner as in Example 1 except that the mixture of Ni_{0.65}Co_{0.05}Mn_{0.30}(OH)₂ and LiOH was heat treated at 840 °C for 8 hours to prepare the first positive electrode active material had a primary particle size of 0.462 µm and a primary particle aspect ratio of 2.47, and the first and second positive electrode active materials was mixed in a weight ratio of 7:3 in preparing the positive electrode active material.

### Comparative Example 3

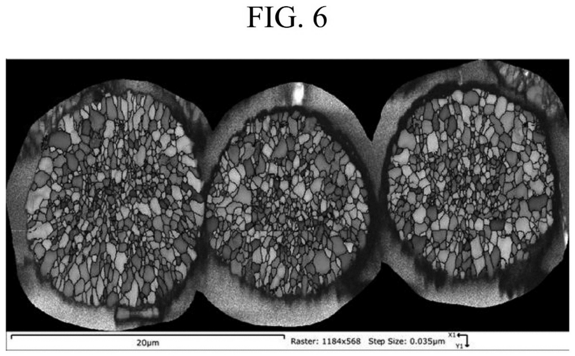

Ni_{0.75}Mn_{0.23}Al_{0.02}(OH)₂ and LiOH were mixed to have a molar ratio of (Ni+Mn+Al):Li = 1:1. The mixture was then heat-treated at 845 °C for 8 hours under an oxygen atmosphere to prepare a first positive electrode active material containing a first lithium nickel-based composite oxide having a composition of LiNi_{0.75}Mn_{0.23}Al_{0.02}O₂ in the form of secondary particles having an average particle diameter (D₅₀) of 12 µm. FIG. 6 shows a cross-sectional image of the first positive electrode active material examined through electron backscatter diffraction. The first positive electrode active material had a primary particle size of 0.697 µm and a primary particle aspect ratio of 2.02.

A second positive electrode active material was prepared in the same manner as in Example 1, and except that the first positive electrode active material and the second positive electrode active material were mixed in a weight ratio of 7:3, a positive electrode active material and a rechargeable lithium battery cell were made in the same manner as in Example 1.

### Comparative Example 4

A positive electrode active material and a rechargeable lithium battery cell were made in the same manner as in Comparative Example 3 except that the mixture of Ni_{0.75}Mn_{0.23}Al_{0.02}(OH)₂ and LiOH was heat treated at 870 °C for 8 hours to prepare the first positive electrode active material had a primary particle size of 1.081 µm and a primary particle aspect ratio of 2.18 in preparing the positive electrode active material.

### Comparative Example 5

A positive electrode active material and a rechargeable lithium battery cell were made in the same manner as in Comparative Example 3 except that the mixture of Ni_{0.75}Mn_{0.23}Al_{0.02}(OH)₂ and LiOH was heat treated at 880 °C for 8 hours to prepare the first positive electrode active material had a primary particle size of 1.234 µm and a primary particle aspect ratio of 2.21 in preparing the positive electrode active material.

### Comparative Example 6

A positive electrode active material and a rechargeable lithium battery cell were made in the same manner as in Comparative Example 3 except that the mixture of Ni_{0.75}Mn_{0.23}Al_{0.02}(OH)₂ and LiOH was heat treated at 820 °C for 8 hours to prepare the first positive electrode active material had a primary particle size of 0.403 µm and a primary particle aspect ratio of 1.82 in preparing the positive electrode active material.

### Comparative Example 7

A positive electrode active material and a rechargeable lithium battery cell were made in the same manner as in Comparative Example 3 except that the mixture of Ni_{0.75}Mn_{0.23}Al_{0.02}(OH)₂ and LiOH was heat treated at 830 °C for 8 hours to prepare the first positive electrode active material had a primary particle size of 0.549 µm and a primary particle aspect ratio of 1.92, and the first and second positive electrode active materials were mixed in a weight ratio of 6:4 in preparing the positive electrode active material.

### Comparative Example 8

A positive electrode active material and a rechargeable lithium battery cell were made in the same manner as in Comparative Example 3 except that the mixture of Ni_{0.75}Mn_{0.23}Al_{0.02}(OH)₂ and LiOH was heat treated at 820 °C for 8 hours to prepare the first positive electrode active material had a primary particle size of 0.403 µm and a primary particle aspect ratio of 1.82, and the first and second positive electrode active materials were mixed in a weight ratio of 3:7 in preparing the positive electrode active material.

### Comparative Example 9

A positive electrode active material and a rechargeable lithium battery cell were made in the same manner as in Comparative Example 8 except that the mixture of Ni_{0.75}Mn_{0.23}Al_{0.02}(OH)₂ and LiOH was heat treated at 870 °C for 8 hours to prepare the first positive electrode active material had a primary particle size of 1.081 µm and a primary particle aspect ratio of 2.18 in preparing the positive electrode active material.

The composition of the first lithium nickel-based composite oxide, the primary particle size and a primary particle aspect ratio of the first positive electrode active material, the composition of the second lithium nickel-based composite oxide, and the weight ratio of the first and second positive electrode active materials are shown in Table 1.

The primary particle size and the primary particle aspect ratio of the first positive electrode active material were subjected to electron backscatter diffraction (EBSD) analysis by using used Oxford's Symmetry S3 EBSD as an EBSD measuring device, wherein the sample was ion-milled by using CP (ArBlade5000, Hitachi). The EBSD was measured at an acceleration voltage of 15 keV and a current of 13 nA by using an e-flash HR EBSD detector made by Bruker Ltd.

**Table 1**

| | First lithium nickel-based composite oxide | primary particle size (µm) | primary particle aspect ratio | Second lithium nickel-based composite oxide | Weight ratio |
|---|---|---|---|---|---|
| Ex. 1 | LiNi_{0.65}CO_{0.05}Mn_{0.30}O₂ | 0.697 | 3.05 | LiNi_{0.60}Co_{0.10}Mn_{0.30}O₂ | 4:6 |
| Ex. 2 | LiNi_{0.65}Co_{0.05}Mn_{0.30}O₂ | 0.697 | 3.05 | LiNi_{0.60}Co_{0.10}Mn_{0.30}O₂ | 3:7 |
| Ex. 3 | LiNi_{0.65}Co_{0.05}Mn_{0.30}O₂ | 0.697 | 3.05 | LiNi_{0.60}Co_{0.10}Mn_{0.30}O₂ | 2:8 |
| Ex. 4 | LiNi_{0.65}Co_{0.05}Mn_{0.30}O₂ | 1.012 | 3.16 | LiNi_{0.60}Co_{0.10}Mn_{0.30}O₂ | 4:6 |
| Ex. 5 | LiNi_{0.65}Co_{0.05}Mn_{0.30}O₂ | 0.697 | 3.05 | LiNi_{0.60}Co_{0.10}Mn_{0.30}O₂ | 1:9 |
| Ex. 6 | LiNi_{0.65}Co_{0.05}Mn_{0.30}O₂ | 0.697 | 3.05 | LiNi_{0.60}Co_{0.10}Mn_{0.30}O₂ | 4.5:5.5 |
| Comp. Ex. 1 | LiNi_{0.65}Co_{0.05}Mn_{0.30}O₂ | 1.214 | 3.45 | LiNi_{0.60}Co_{0.10}Mn_{0.30}O₂ | 5:5 |
| Comp. Ex. 2 | LiNi_{0.65}Co_{0.05}Mn_{0.30}O₂ | 0.462 | 2.47 | LiNi_{0.60}Co_{0.10}Mn_{0.30}O₂ | 7:3 |
| Comp. Ex. 3 | LiNi_{0.75}Mn_{0.23}Al_{0.02}O₂ | 0.697 | 2.02 | LiNi_{0.60}Co_{0.10}Mn_{0.30}O₂ | 7:3 |
| Comp. Ex. 4 | LiNi_{0.75}Mn_{0.23}Al_{0.02}O₂ | 1.081 | 2.18 | LiNi_{0.60}Co_{0.10}Mn_{0.30}O₂ | 7:3 |
| Comp. Ex. 5 | LiNi_{0.75}Mn_{0.23}Al_{0.02}O₂ | 1.234 | 2.21 | LiNi_{0.60}Co_{0.10}Mn_{0.30}O₂ | 7:3 |
| Comp. Ex. 6 | LiNi_{0.75}Mn_{0.23}Al_{0.02}O₂ | 0.403 | 1.82 | LiNi_{0.60}Co_{0.10}Mn_{0.30}O₂ | 7:3 |
| Comp. Ex. 7 | LiNi_{0.75}Mn_{0.23}Al_{0.02}O₂ | 0.549 | 1.92 | LiNi_{0.60}Co_{0.10}Mn_{0.30}O₂ | 6:4 |
| Comp. Ex. 8 | LiNi_{0.75}Mn_{0.23}Al_{0.02}O₂ | 0.403 | 1.82 | LiNi_{0.60}Co_{0.10}Mn_{0.30}O₂ | 3:7 |
| Comp. Ex. 9 | LiNi_{0.75}Mn_{0.23}Al_{0.02}O₂ | 1.081 | 2.18 | LiNi_{0.60}Co_{0.10}Mn_{0.30}O₂ | 3:7 |

### Evaluation 1: Specific Surface Area

The positive electrode active materials of the examples and the comparative examples were measured with respect to a BET specific surface area, and the results are shown in Table 2. The BET specific surface area was measured by using a specific surface area measuring device, (HM model-1208 made by Mountech) using a nitrogen gas adsorption method. Specifically, about 0.3 g of each positive electrode active material sample was heated at 300 °C under a nitrogen atmosphere for 1 hour in a preprocessor and additionally, pretreated at 300 °C for 15 minutes in the specific surface area measuring device, and then cooled to a temperature of liquid nitrogen and saturated by adsorption with a gas containing 30% of nitrogen and 70% of He. Subsequently, the samples were heated to room temperature to measure an amount of desorbed gas, which was used to calculate its specific surface area in a conventional BET method.

### Evaluation 2: Initial Charge/Discharge Capacity and Efficiency

The rechargeable lithium battery cells of Examples and Comparative Examples were charged to an upper voltage limit of 4.3 V at a constant current of 0.2 C and to 0.05 C at the constant voltage and discharged to a cut-off voltage of 3.0 V at 0.2 C at 25 °C for initial charge and discharge.

Table 2 shows the initial charge capacity (0.2 C charge) and initial discharge capacity (0.2 C discharge), and the ratio of the latter to the former, calculated as efficiency.

### Evaluation 3: High-temperature Cycle-life

After the initial charge/discharge of Evaluation 2, the cells were charged and discharged 50 times or more at 1.0 C within a voltage range of 3.0 V to 4.3 V at 45 °C to calculate a ratio of 50^{th} cycle discharge capacity to the initial discharge capacity. The results are shown in Table 2 as the high-temperature cycle-life.

**Table 2**

| | Specific surface area (m²/g) | Charge capacity (mAh/g) | Discharge capacity (mAh/g) | Efficiency (%) | High-temperature cycle-life (%, 45 °C, 50 cyc) |
|---|---|---|---|---|---|
| Ex. 1 | 0.65 | 227.6 | 195.3 | 85.8 | 95.7 |
| Ex. 2 | 0.76 | 225.7 | 195.2 | 86.5 | 96.1 |
| Ex. 3 | 0.85 | 223.5 | 194.9 | 87.2 | 97.3 |
| Ex. 4 | 0.62 | 226.9 | 194.2 | 85.6 | 95.9 |
| Ex. 5 | 0.80 | 221.6 | 197.4 | 89.1 | 97.5 |
| Ex. 6 | 0.60 | 228.2 | 195.7 | 85.8 | 96.2 |
| Comp. Ex. 1 | 0.61 | 228.4 | 190.0 | 83.2 | 89.0 |
| Comp. Ex. 2 | 0.91 | 227.5 | 189.1 | 83.1 | 88.2 |
| Comp. Ex. 3 | 0.48 | 229.5 | 192.1 | 83.7 | 92.1 |
| Comp. Ex. 4 | 0.44 | 231.4 | 191.6 | 82.8 | 87.6 |
| Comp. Ex. 5 | 0.42 | 232.4 | 189.4 | 81.5 | 84.3 |
| Comp. Ex. 6 | 0.51 | 228.0 | 187.6 | 82.3 | 90.3 |
| Comp. Ex. 7 | 0.50 | 229.0 | 192.8 | 84.2 | 92.6 |
| Comp. Ex. 8 | 0.70 | 224.8 | 187.9 | 83.6 | 92.3 |
| Comp. Ex. 9 | 0.68 | 224.5 | 190.6 | 84.9 | 91.0 |

Referring to Table 2, the examples were confirmed to exhibit high initial discharge capacity and initial charge/discharge efficiency and also have excellent high-temperature cycle-life characteristics. In particular, the positive electrode active material according to Example 3, which was prepared using the first positive electrode active material having a primary particle size of 0.697 µm and a primary particle aspect ratio of 3.05 and mixing the first and second positive electrode active materials in a weight ratio of 2:8, exhibited the highest initial charge/discharge efficiency and excellent high-temperature cycle-life characteristics.

On the other hand, Comparative Examples 1 to 7, which did not include 55 wt% to 90 wt% of the second positive electrode active material based on 100 wt% of a total of the first positive electrode active material and the second positive electrode active material, and Comparative Examples 2 and 4 to 9, whose first positive electrode active materials did not have average particle sizes of 0.60 µm to 1.05 µm, were confirmed to exhibit lower initial discharge capacity and initial charge/discharge efficiency and inferior high-temperature cycle-life characteristics as compared to the examples.

### Evaluation 4: Pellet Density

The positive electrode active materials were measured with respect to pellet density according to the following method. 3 grams of the positive electrode active materials was put in a mold (area: 1.298 cm²), and then a mold bar was slowly inserted into a mold body. The mold set was placed in a hydraulic pressure press and then pressed at a pressure of 4 tons (Metric ton) for 30 seconds to measure a height, which was used to the measure pellet density.

Example 2, in which the first lithium nickel-based composite oxide and the second lithium nickel-based composite oxide were mixed in a weight ratio of 3:7, was measured to have pellet density of 3.39 g/cc.

On the other hand, when the first lithium nickel-based composite oxide and the second lithium nickel-based composite oxide in Example 2 were mixed in a weight ratio of 1:9, the pellet density was measured to be 3.18 g/cc. When the first lithium nickel-based composite oxide in Example 2 alone was used, the pellet density was measured to be 3.12 g/cc. And when the second lithium nickel-based composite oxide in Example 2 alone was used, the pellet density was measured to be 3.00 g/cc. Accordingly, when the first lithium nickel-based composite oxide and the second lithium nickel-based composite oxide were mixed in a weight ratio of 3:7 according to Example 2, high pellet density was achieved, thereby providing for high capacity and energy density.

While this present disclosure has been described in connection with what is considered to be practical example embodiments, it is to be understood that the disclosure is not limited to the disclosed embodiments. Rather, the present disclosure includes various modifications and equivalent arrangements.

## Claims

1. A positive electrode active material comprising
a first positive electrode active material comprising a first lithium nickel-based composite oxide and being in a form of secondary particles that are agglomerations of primary particles, the primary particles having an average particle diameter of 0.6 µm to 1.05 µm as measured by electron backscatter diffraction; and
a second positive electrode active material including a second lithium nickel-based composite oxide and being in a form of single particles;
wherein an average particle diameter (D₅₀) of the secondary particles of the first positive electrode active material is greater than an average particle diameter (D₅₀) of the single particles of the second positive electrode active material, and
wherein, based on 100 wt% of a total of the first positive electrode active material and the second positive electrode active material, the positive electrode active material comprises 10 to 45 wt% of the first positive electrode active material and 55 to 90 wt% of the second positive electrode active material.

2. The positive electrode active material as claimed in claim 1, wherein the first lithium nickel-based composite oxide and second lithium nickel-based composite oxide are each independently represented by:
Liₐ₁Niₓ₁M¹_{y1}M²_{z1}O_{2-b1}X_{b1}
where 0.9≤a1 ≤1.8, 0.3≤x1≤1, 0≤y1≤0.7, 0≤z1≤0.7, 0.9≤x1+y1+z1≤1.1, and 0≤b1 ≤0.1, M¹ and M² are different and are each one or more of Al, B, Ba, Ca, Ce, Co, Cr, Cu, Fe, Mg, Mn, Mo, Nb, Si, Sn, Sr, Ti, V, W, Y, Zn, and Zr, and X is one or more of F, P, and S.

3. The positive electrode active material as claimed in claim 1 or claim 2, wherein a nickel content of the first lithium nickel-based composite oxide based on 100 mol% of total metal in the first lithium nickel-based composite oxide excluding lithium is greater than a nickel content of the second lithium nickel-based composite oxide based on 100 mol% of total metal in the second lithium nickel-based composite oxide excluding lithium.

4. The positive electrode active material as claimed in any one of claims 1 to 3, wherein a nickel content of the first lithium nickel-based composite oxide based on 100 mol% of total metal in the first lithium nickel-based composite oxide excluding lithium and a nickel content of the second lithium nickel-based composite oxide based on 100 mol% of total metal in the second lithium nickel-based composite oxide excluding lithium are each independently 50 mol% to 70 mol%.

5. The positive electrode active material as claimed in any one of claims 1 to 4, wherein a nickel content based on 100 mol% of total metal in the first lithium nickel-based composite oxide excluding lithium is 60 mol% to 70 mol%, and
wherein a nickel content based on 100 mol% of total metal in the second lithium nickel-based composite oxide excluding lithium is 55 mol% to 65 mol%.

6. The positive electrode active material as claimed in any one of claims 1 to 5, wherein a ratio of a molar nickel content in the first lithium nickel-based composite oxide based on 100 mol% of total metal in the first lithium nickel-based composite oxide excluding lithium to a molar nickel content in the second lithium nickel-based composite oxide based on 100 mol% of total metal in the second lithium nickel-based composite oxide excluding lithium is 1.05 to 1.3.

7. The positive electrode active material as claimed in any one of claims 1 to 6, wherein
(a) an average particle diameter (D₅₀) of the secondary particles of the first positive electrode active material is 8 µm to 20 µm,
and/or
(b) an average particle diameter (D₅₀) of the single particles of the second positive electrode active material is 1 µm to 8 µm.

8. The positive electrode active material as claimed in any one of claims 1 to 7, wherein an average particle size of the single particles of the first positive electrode active material as measured by backscatter electron diffraction is 0.65 µm to 0.8 µm.

9. The positive electrode active material as claimed in any one of claims 1 to 8, wherein
(a) an aspect ratio of the single particles of the first positive electrode active material as measured by electron backscatter diffraction is 2.7 to 3.3,
and/or
(b) an aspect ratio of the primary particles of the first positive electrode active material measured through electron backscatter diffraction in the first positive electrode active material is 3.0 to 3.1.

10. The positive electrode active material as claimed in any one of claims 1 to 9, wherein a BET specific surface area of the positive electrode active material is 0.6 m²/g to 0.9 m²/g.

11. The positive electrode active material as claimed in any one of claims 1 to 10, wherein, based on 100 wt% of a total of the first positive electrode active material and the second positive electrode active material, the positive electrode active material comprises 20 to 30 wt% of the first positive electrode active material and 70 to 80 wt% of the second positive electrode active material.

12. The positive electrode active material as claimed in any one of claims 1 to 11, wherein a pellet density of the positive electrode active material is 3.0 g/cc to 3.8 g/cc.

13. A positive electrode comprising:
a current collector; and
a positive electrode active material layer on the current collector,
wherein the positive electrode active material layer comprises the positive electrode active material as claimed in any one of claims 1 to 12.

14. The positive electrode as claimed in claim 13, wherein
(a) a density of the positive electrode active material layer is 3.2 g/cc to 3.7 g/cc,
and/or
(b) a loading level of the positive electrode active material layer is 10 mg/cm² to 40 mg/cm².

15. A rechargeable lithium battery comprising:
the positive electrode as claimed in claim 13 or claim 14;
a negative electrode; and
an electrolyte.
